# EUROPEAN PATENT APPLICATION

(11) **EP 4 471 432 A1**
(43) Date of publication of application: **04.12.2024**
(21) Application number: 23176943.1
(22) Date of filing: 02.06.2023
(51) Int. Cl.: G01Q 60/22, G01Q 60/18, G01Q 60/50, G01Q 70/16, G02B 6/42

(54) **PROBE SUPPORT STRUCTURE FOR A MICROMETER-SCALE AND/OR NANOMETER-SCALE MEASURING DEVICE**

(71) Applicant: Universität Basel, 4001 Basel (CH)
(72) Inventor: Shields, Brendan, 4056 Basel (CH); Happacher, Jodok, 4056 Basel (CH); Maletinsky, Patrick, 4056 Basel (CH)
(74) Representative: Braunpat AG

(57) **Abstract**

The invention relates to a probe support structure for a small-scale measuring device, particularly a micrometer-scale or nanometer-scale measuring device, more particularly for a scanning magnetometry device using nitrogen-vacancy (NV) magnetic imaging comprising a probe unit (18) designed for scanning a sample, a holder (1) comprising a probe end (2) carrying the probe unit (18) and a connecting end (3) for connection to the measuring device, and a driving field coupling structure comprising a first coupling lead and a second coupling lead separated from each other between the probe end (2) and the connecting end (3) of the holder (1). At least one longitudinal side of the holder (1) carries the coupling structure, wherein at least a first surface (6) and a second surface (7) of at least one longitudinal side of the holder (1) are separated from each other between the probe end (2) and the connecting end (3) and connected to each other at the probe end (2). The first coupling lead (15) covers the first surface (6) and the second coupling lead (16) covers the second surface (7). The holder (1) can comprise a through hole (10) at the probe end (2) for a driving field through the through hole (10) to provide optical access.

## Description

The invention relates to a probe support structure for a small-scale measuring device, particularly a micrometer-scale and/or nanometer-scale measuring device, and a method for manufacturing the probe support structure. The invention relates especially to a small-scale measuring device using a driving field, which enables imaging a magnetic field of a sample while the sample is being scanned. In particular the invention relates to a probe support structure for a scanning magnetometry device using nitrogen-vacancy (NV) magnetic imaging with a microwave driving field.

Visualization of micro- and nanoscale features is important in many areas of micro- and nanoscale science and technology. A variety of micrometer-scale and nanometer-scale measuring devices are available on the market for measuring samples and sample surfaces comprising a resolution in this scale range. Besides microscopic measuring devices scanning magnetometry is a well-established technique in this field.

Magnetic features appear in many different systems, for example in ferromagnetic structures such as magnetic domains or particles. Many magnetic materials and phases such as skyrmions, ferroelectrics, topological insulators, and complex oxides have magnetic features at a nanometer scale. Existing measuring technologies for measuring such features use for example stray fields from magnetic materials and phases, or moving charges producing Oersted magnetic fields. This can provide insight into mesoscopic electron transport in semiconductor physics, integrated circuits, and thin photoactive films. Also, the magnetism of nuclear spins can be exploited in the context of magnetic resonance imaging.

Scanning spin magnetometry uses diamond sensors with color centers, for example a nitrogen-vacancy (NV) center on an atomic force microscope tip. Magnetic fields can be imaged with nanoscale spatial resolution, potentially revealing spin and current flow patterns in materials or signalling pathways in biological systems.

The nitrogen vacancy (NV) center in a diamond is used as a highly sensitive probe to detect magnetic fields with high spatial resolution. It is an ideal probe for nanoscale magnetic imaging thanks to its atomic size. Furthermore, the NV center is also stable in a wide range of temperatures, photostable, chemically inert and non-toxic, making it a versatile probe in many applications.

The NV center is a fluorescent defect in diamonds with unique photophysical features. The spin configuration of the color center is coupled to its luminescence allowing for the detection of nearby magnetic fields by the Zeeman Effect with simple luminescence measurements. Electromagnetic radiation with various frequencies drives the internal spin transitions during a measurement cycle. The electromagnetic field couples to the color center through a near-field coupling device, sometimes called antenna. The spatial and geometric stability of the coupling device is crucial for achieving a constant coupling strength and thus to achieve high-quality magnetic measurements. Instability of the coupling device can for instance happen due to heating inside the device, external noise or a varying distance between the coupling device and the NV (movement). The proximity of the coupling device to the color center also plays an important role as the driving field falls off with increasing distance from the coupling device. Therefore, the further a color center is from the coupling device, the more driving field power is required, making the scanning approach less efficient and more invasive.

In order to take scanning measurements with a color center, one option is to have the color centre mounted onto a movable support. There, the color center is provided inside a tapered structure or a nanostructure. The height of such a tapered structure or nanostructure is normally in the 2-20 µm range. This device is attached to a support structure, which is mounted onto a larger structure such as a quartz tuning fork that is for example used for atomic force measurements controlling the sensor to sample distance. The support structure can have different forms and materials, such as etched Silicon or simply a tapered quartz rod.

There are various ways to bring the antenna required for the measurement in the proximity of the color center. They can be differentiated in three subclasses: 1. The antenna is fixed on the sample object of investigation, 2. the antenna is on an additional, independent holder and 3. the antenna is on the same stage as the support structure of the color center.

First, the antenna can be a patterned structure on the sample object created by nano-fabrication techniques or a simple wire close to the surface of the sample. This approach yields no flexibility during scanning. Only areas close to the wire/structure can be imaged because the driving field is proximal to the region of the wire/structure. The rest is inaccessible to the sensor. Also, the coupling strength varies over the scan range, because the color center position moves through the field gradient of the wire/structure, leading to a sensitivity gradient.

Second, a separate holder can be used for the antenna. It can be positioned independently of the sample object and/or sensor and gives flexibility in the manual adjustment of the scan range. The antenna and the probe can both be kept stationary, and the sample can be scanned. In that case the probe experiences a constant field. However, the separation between the antenna and the color center is not stable. The diamond center and the antenna can move independently resulting in a changing field experienced by the color center of the diamond. One of the reasons of such a movement is the heating of the coupling device which is power and frequency dependent. Also, this approach requires a large space for the stage carrying the antenna. Especially in low temperature application such space requirements are not acceptable. Further, the antenna or the probe need to be moved around through manual adjustments by the operator. The closer the antenna is to the scanning probe comprising the color center, the higher the risk to destroy it.

Third, the antenna can also be mounted on the sensor stage. This enables a relatively stable coupling over the entire scan range of the sensor. It is however very difficult to realize such an antenna due to the size restrictions of the sensor. The most common way to realize this type of antenna is with a wire, which is placed in proximity of the color center.

One example of a sensor device for use in a scanning probe microscope having a diamond probe comprising a spin defect in form of a NV center is disclosed in WO 2018/167115. The sensor device comprises a flat chip carrier. At its proximal end the carrier is connected to the scanning probe microscope. At the distal end the carrier forms two parallel arms protruding in distal direction. A piezoelectric tuning fork sensor is attached to the carrier. A thin arm is attached to the tuning fork sensor with one end. The other end carries a probe with a small diamond tip. An antenna in the form of a thin wire or arranged on a separate antenna holder is attached to the distal arms of the carrier and is electrically connected to feed lines on top of the carrier arms for feeding microwave radiation to the antenna. The antenna is arranged in the vicinity of the diamond tip to interact with the color center of the diamond tip and the sample object. The sensor device is assembled by affixing the tuning fork to the carrier, affixing the handle structure to the tuning fork, and affixing the diamond tip to the handle. In a further example of a sensor device according to WO 2018/167115, the antenna is a planar loop passing in close proximity to the probe tip. The antenna is attached to the handle structure. It can be formed by a piece of wire or can be lithographically patterned on an annular dielectric substrate. However, lithography patterning has limitations in terms of patterning 3-dimensional structures for the antenna.

An antenna in form of a freely arranged thin wire that is not on the support structure itself leads to a decoupled movement due to thermal and mechanical reasons. Applying high radio frequency powers or changing the frequency due to frequency dependent attenuation leads to thermal movement of the antenna relative to the color center. The coupling strength is therefore still variable. Also, it is difficult to have a known distance between the tip and wire during measurements. Also, mechanical vibration can couple differently to the support structure and coupling device.

Further, many of the known coupling devices have the disadvantage that they are all single copies. Thus, it is not possible to reproduce the mount of the color centers or even scale up the antenna production in batch fabrication. The coupling strength is different for each and every copy, for example due to changing antenna shapes and changing distances to the tip. The separation between support structure and antenna still allows for varying coupling strengths over a scan for example due to thermal movement of the wire. A slight shift in the antenna position can interfere with AFM operation and cause a drift in the position of the sensor.

Another example of a nanoscale probe measurement device is shown in US 2016/282427 A1. A probe arm assembly is produced from a crystal film and comprises an NV centre within a probe arm. A beam splitter is connected to the arm and a light source to produce the excitation illumination and a detector for the photoluminescence produced by the NV centre are connected to the beam splitter.

In such case, the fabrication of the antenna is limited by the probe arm dimensions in terms of size and material thickness, which may hinder the application of the required microwave power to the antenna.

In summary, direct detection of magnetic fields with micrometer or nanometer resolution is challenging as current state-of-the-art techniques have limited magnetic field sensitivity, spatial resolution, incompatibility with samples or lack reproducibility of measurements. Especially in space constraint environments, they have a limited scan range.

It is an object of the invention to provide a probe support structure for a small-scale measuring device and a method of producing such a probe support structure, which provide improved magnetic field sensitivity and spatial resolution, which allow for close positioning of a probe sensor to a sample object, which allow for reliably reproducing measuring conditions and measurements, which comprise a simple and compact set up and which are compatible with different sample objects.

These and other objects, which will appear from the description below, are achieved by a probe support structure, a nanometer-scale measuring device and a method for producing the probe support structure as set forth in the appended independent claims. Preferred embodiments are defined in the dependent claims.

A probe support structure for a small-scale measuring device, particularly for a micrometer-scale or nanometer-scale measuring device, according to the present invention comprises a holder comprising a probe end for carrying a probe unit designed for scanning a sample object and a connecting end for connection to the measuring device, particularly to a driving field generating source thereof. For scanning a sample, the sample can be moved or the probe unit can be moved. The holder is designed as an elongated beam or substrate, comparable to a cantilever with a stationary proximal end and a free distal end. The shape of the holder can be adapted to the requirements of the measuring method. For example, the holder can be straight, angled or curved. The probe end and the connection end are defined as end portions at opposing ends of the holder.

Further, the probe support structure comprises a coupling structure, particularly for near-field coupling at a micrometer or nanometer scale. The coupling structure comprises a first coupling lead and a second coupling lead separated from each other between the probe end and the connecting end of the holder for providing a driving field, particularly a microwave radiation field, at the probe end. At least one longitudinal side of the holder carries the coupling structure. At least a first surface and a second surface of at least one longitudinal side of the holder are separated from each other between the probe end and the connecting end for electrical isolation of the at least first and second surfaces. The first surface and the second surface may be on the same longitudinal side or may be on different longitudinal sides of the holder. The first surface and the second surface are connected to each other at the probe end defining a coupling area. The first coupling lead covers the first surface and the second coupling lead covers the second surface to realize a coupling loop for providing the driving field. The first coupling lead and the second coupling lead cover the first surface and the second surface respectively along the length of the holder. Advantageously, the complete surface area of the longitudinal side is used for the first surface and the second surface for providing the coupling leads, while the leads are isolated from each other to create the loop structure. However, the first surface and the second surface do not need to extend over the whole width of the longitudinal side. Preferably, one side of the holder is separated into equally sized surfaces by a separation means ensuring electrical isolation of the parallel surfaces along the holder when covered by the leads. The size proportions of the first surface and the second surface may for example be derived from an impedance matching design to ensure good transmission. The design of the probe support structure according to the present invention allows for a close positioning of the coupling structure to a probe unit, which results in a high sensitivity and high spatial resolution of the measuring device using the probe support structure. Further, the arrangement of the coupling structure on the surface of the holder allows for precise reproduction of a number of copies of the probe support structure, which ensures precise and reproduceable measurements. Additionally, the leads to the distal end of the probe support structure can be used as electric lines which enable further scanning modalities such as scanning tunnel microscopy (STM) in conjunction with NV magnetometry. Also, multiple leads are possible, one time for the driving field and one time for electric contacts. The leads may be arranged on the same side or on different sides of the probe support structure as mentioned above.

In a further aspect, the invention provides a nanometer-scale measuring device for scanning magnetometry comprising a tuning fork and a probe support structure as described above that is coupled or attached to the tuning fork. The probe support structure is particularly suitable for a nanometer-scale measuring device for scanning magnetometry using a NV magnetic imaging technique.

In an example embodiment of the probe support structure a longitudinal side of the holder is partitioned to define the first surface and the second surface separated from each other on the longitudinal side. Preferably, a longitudinal side of the holder is separated into equally sized surfaces by a separation means ensuring electrical isolation of the parallel surfaces along the holder. The probe unit can be arranged on the side opposite to the longitudinal side having the first surface and the second surface. Alternatively, the probe unit can be arranged on the same or any other side of the holder.

In one example, the probe unit and the first and second surface are provided on opposite sides of the holder. Thus, the coupling structure and the probe unit are arranged in a well-defined distance corresponding to the thickness of the holder and the size of the probe unit.

The field at the position of the color center can be influenced/engineered by the shape and exact geometry at the coupling loop. Advantageously, the coupling structure can be positioned very close to the color center of the probe unit for accurate measurements in a nanometer-scale range. Preferably, the color center can be positioned in the center of the coupling loop of the coupling device. This allows a particularly strong coupling to of the microwave driving field.

In one example embodiment of the probe support structure according to the present invention, the first surface and the second surface on a longitudinal side of the holder are separated by an elongated groove extending between the probe end and the connecting end on the longitudinal side of the holder. The groove separates the first and the second coupling leads without increasing the thickness or diameter of the holder.

For example, the groove is formed as a recess having undercut side flanks at each side adjacent to the separated surfaces of the longitudinal side of the holder. The groove has for example a trapezoidal shape with an upper parallel side at the holder surface and a lower parallel side recessed into the holder, wherein the upper parallel side is smaller than the lower parallel side. That means the edges between the side flanks of the groove and the first and the second surface have an acute angle. Such undercuts facilitate the manufacturing of an electrical isolation between the first and the second coupling lead. Alternatively, the groove can simply be provided as an inverted T shape or V shape.

It is possible that the longitudinal side of the holder comprises more than one groove to separate at least one additional surface for at least one additional lead. For example, a second groove separates a third surface for a third lead towards the distal end of the holder. This way additional detection means can be supported by the probe support structure and electrically connected, for example for scanning tunnel microscopy (STM) in addition to NV magnetometry imaging or electronical readout of the NV photoluminescence itself. Also, additional direct manipulation of the probe is possible. Furthermore, the additional leads can be used for additional control of the measurement scheme such as electrical control of the charge state of the NV through application of control voltages. And, an electric field can be applied to manipulate and change the working point of the color center and probe unit, respectively, to get optimal experimental conditions or to enable the probe unit to measure electric fields.

In a further example embodiment of the probe support structure according to the present invention, the holder is made of non-conducting material, like polymer material, resin, glass or silicon, and the coupling leads are realized as conducting layers of conductive material applied onto the first surface and the second surface. For example, the conducting layers are realized as deposited layers, particularly evaporated layers, as will be explained below. The layers advantageously cover the complete width and length of the first and second surface, respectively. Thus, the leads of the coupling structure contribute minimally to the thickness of the probe support structure while providing optimal conductivity for the driving field. The conducting layers may for example consist of gold, copper, platinum, silver, aluminum, palladium, and/or titanium. In general, any metal can be used that does not oxidize through the thickness of the layer. Also, super-conductive materials may be used for the coupling leads, which is particularly suitable for low temperature applications.

In another example embodiment of the probe support structure according to the present invention, the first surface and the second surface merge at the probe end. This way they realize a continuous surface area at the probe end of the holder. Also, the shape of the merge of the two surfaces can be engineered to optimize the coupling. For example, the first coupling lead and the second coupling lead can merge at the probe end by covering the continuous surface area to realize the coupling loop. The coupling structure can be produced in a single production step by applying the coupling leads on the first and the second surfaces along the holder and on the continuous surface at the probe end at the same time in the same step.

In case of more than one groove in the longitudinal holder side for at least one additional surface as described above, the groove may define a loop at the tip of the holder to define an additional continuous surface isolated from the first continuous surface. In this case for example two pairs of leads can be defined for the supply of two detections means: (1) a first and a second lead looping at a first continuous surface for NV magnetometry imaging, and (2) a third and a fourth lead looping at a second continuous surface for scanning tunnel microscopy or another detection means. The additional leads can also be used to electronically control aspects of the measuring device, for example the charge state of the NV. Further, there is the possibility for an electrical readout of the NV center for example by using at least a pair of leads as the readout channel.

Alternatively, the additional leads do not necessarily need to merge at the tip end of the support structure. They can also end directly at the probe unit without a loop configuration. For example, they can be continued onto the probe unit itself, and possibly onto the tapered structure, by other means such as FIB Induced Deposition or FEB Induces Deposition. This enables very close electrodes to the color center in the tapered structure. Furthermore, it is possible that the probe unit is an integral part or section of the holder, and therefore the first coupling lead and the second coupling may extend onto the probe unit to merge.

Alternatively, for connecting the first surface and the second surface a bridging element can join these two surfaces. The bridging element is arranged level with these surfaces to provide a continuous surface at the probe end. Such bridging element is favourable to increase the mechanical stability of the probe support structure.

In yet a further example embodiment of the probe support structure according to the present invention, the holder comprises a through hole at the probe end so that a driving field can extend through the through hole. The hole is encompassed by the first surface, the second surface and the continuous surface area at the probe end of the holder. Also, the separation groove may end into the through hole. The probe unit can be arranged directly below the through hole for homogeneous exposure to a driving field of the coupling structure. The through hole allows for optical addressing of the color center for initialization and readout during measurements in a well-defined position of the coupling structure and the probe unit relative to the sample object.

Preferably, the through hole has a conical shape with a larger diameter at the longitudinal side comprising the first and second surface and a smaller diameter at the side of the holder carrying the probe unit. This shape is adjusted to the pathway of the optical excitation and detection of the color center and minimizes field obstructions caused by the holder. Further, this shape helps focussing the driving field according to the requirements of the measuring technology. As mentioned before, the shape of through hole can be optimized and engineered for the coupling at the color center position. For example, the through hole has a diameter larger than 0.5pm. Preferably, a diameter in the range of 1-15pm, and more preferred a diameter about 10pm is used. In case of a conical shape the angle between the conical surface and the top surface can for example be in in the range of 10° - 50°. Due to the conical nature of the through hole the coupling distance between coupling loop and probe unit can be less than the thickness of the holder. In most cases, the probe unit containing the color center will be placed in the center of the though hole, which defines the center of the coupling loop, to maximize the driving field.

Alternatively, in case of no through hole the probe unit can be arranged laterally displaced from a center of the probe end of the holder to ensure defined interaction of the probe unit and the driving field. The lateral displacement of the probe tip from the support structure advantageously is less than 100 micrometers, preferably less than 20 micrometers, more preferably less than 10 micrometers. In case the first surface and the second surface are separated by an elongated groove extending between the probe end and the connecting end, the groove may terminate shortly before the distal end of the holder, whereby the surfaces join each other and realize a coupling area of the surfaces at the probe end.

Advantageously, the holder is realized as a single rigid holder or single rigid piece that provides the connecting end for connection to the measuring device, particularly to the field generating source or other electrical circuitry, and the probe end holding the measuring sensor as well as the coupling structure for establishing the driving field. It is not necessary to assemble different elements, which has the risk of misalignment and consequently unprecise measuring results. For example, the single rigid holder comprises several sections: e. g. one section for a probe end provided for carrying a probe unit and one section for a connecting end for connection to the measuring device and the field generating source, respectively. In one example, a first section is designed to connect to the radio frequency generator, a second section is designed to guide the radio frequency above the transmission frequency, a third section is designed to ensure that the probe unit is at the lowest point and a fourth section is designed as the loop and the attachment point of the probe unit.

The several section may comprise different width, different thickness, different shapes, different slopes, etc. adapted for different functions and can be joined together. Shapes of the sections can be flat or curved, or any 3-dimensional shape suitable for a specific function.

In one example, the single rigid holder comprises several sections slightly angled towards each other defining a downward reaching shape of the holder. This can ensure that the probe unit is at the lowest point. A probe support structure in form of a single rigid holder comprising several sections angled towards each other by itself provides an advantageous further development compared to the state of the art. Therefore the applicant reserves the right to file a divisional patent application for a probe support structure for a small-scale measuring device, particularly a micrometer-scale or nanometer-scale measuring device, comprising a single rigid holder comprising a probe end section for carrying a probe unit designed for scanning a sample and a connecting end section for connection to the measuring device, wherein at least one section between the probe end section and the connecting end section is arranged angled towards the probe end section and the connecting end section, and wherein the coupling structure comprises a first coupling lead and a second coupling lead separated from each other between the probe end and the connecting end of the holder and joining at the probe end for providing a driving field at the probe end.

Further, the holder can be designed and realized in a way that it does not lead to significant mechanical dissipation at the tuning fork resonance frequency. The holder can have a much higher mechanical resonant frequency than the tuning fork and therefore will not significantly affect the mechanical properties of the tuning fork it is attached to.

In summary, the probe support structure of the invention is holding the probe material, like a diamond, incorporating the color center used for sensing and connects it in a precise relation to the measuring device. The support structure itself acts as a coupling device for the electromagnetic driving field of the spin transitions. The coupling structure itself is defined by the specific shape of the holder meaning it results from its design of the outer contour of the probe support structure. The same goes for the leads of the coupling structure.

The integration of the coupling structure onto the holder makes the coupling independent of the color centre's position on the investigated sample and yields reproducibility in the manufacturing of the probe support structure. A constant driving of the color center independently of the scanning position is achieved.

One example of a nanometer-scale measuring device for scanning magnetometry according to the present invention comprises an optical-active sensor as the probe unit. The optical-active sensor can be arranged at the probe support structure in close vicinity of the coupling structure producing the driving field without the risk of negative impacts.

That the connecting end facilitates the connection to the measuring device and/or microwave source. For example, the connecting end widens the electrical lead to guarantee impedance matching with the connecting circuit. Unused electrical leads can be grounded there, like for example an electrical lead arranged in the groove.

A further aspect of the present invention refers to a method of producing a probe support structure as described above. The holder is formed by subtractive manufacturing or by 3-dimensional printing or photon-induced polymerization using a nonconductive base material, for example fused silica, including forming a separation of the top side of the holder into the first surface and the second surface between the probe end and the connecting end. Next a conductive layer, for example gold, is deposited onto the top side of the holder as the first coupling lead and the second coupling lead of the coupling structure, which merge at the probe end to realize the coupling structure. The probe unit is attached at the probe end of the holder in a defined distance to the coupling structure. Lithographic manufacturing steps are not necessary which simplifies the production of the probe support structure.

The step of subtractive manufacturing can for example be realized by laser-enhanced etching of the fused silica. The subtractive manufacturing can produce the parallel first and second surfaces for the coupling leads, the groove as the separation, the through hole at the probe end and the continuous surface area merging the two parallel separated surfaces of the holder. The first and the second surfaces are also continuous surfaces. Preferably, the separation is realized as a groove with undercuts having a near-vertical or overhanging side flanks as described above. Alternatively, the groove could also be, for example, V-shaped, and the structure could be tilted during the evaporation step so that there is a masking shadow of the groove area. Also, the longitudinal sides of the holder that are adjacent to the longitudinal side carrying the coupling leads may include grooves in order to prevent shorting of the leads and to the contacts of the underlying tuning fork. In case of accidental evaporation under an angle to the surface comprising the coupling leads the side grooves assist in providing well-defined coupling lead dimensions.

Alternatively, the holder can be produced by a 3-dimensional printing process for example using glass, polymers and ceramics, or any other non-conductive, sturdy/stable material which can be shaped with the necessary precision.

The step of depositing a conductive layer onto the top side of the holder can for example be realized by depositing a conducting film onto the nonconducting holder by a unidirectional deposition process, such that the conducting film is deposited only onto those surfaces of the holder that are exposed to the unidirectional flux of conductive material. In addition, the film could be further thickened by electroplating. This allows for extending the film thickness to be in the range of the penetration depth of the source frequency to ensure optimal propagation. For gold at 3 GHz the film thickness is around 1-2 micrometers, which is impractical to achieve with evaporation. The efficiency of the coupling leads can be tuned by the thickness and the width of the leads and the shape of the coupling structure. Preferably, a layer of at least 80nm, more preferable of at least 400nm is deposited on the holder.

Evaporating the material in only one direction forms a conducting film on the holder, which is divided into a layer for the first coupling lead and a layer for the second coupling lead. The layers are not connected for example due to the undercut of the groove because the undercut edges prevent the side flanks from exposure to the conducting material or due to the angle of the holder side towards the evaporation direction. However, the whole longitudinal side of the holder is exposed to the emission of conducting material and therefore the leads on the separated surface are electrically connected to each other at the coupling loop. In case the first and the second surface of the holder merge at the probe end to realize a continuous surface, this area is exposed to the deposition material as well. In case a bridge element is arranged after manufacturing the shape of the holder, in particular the groove separating the first and the second surface, to realize a continuous top side surface area at the probe end, the bridge element is also exposed to the deposition material.

During the step of attaching the probe unit to the holder the probe unit is positioned to have the probe tip at least approximately centred relative to a through hole in the probe end and is positioned to have the probe tip laterally displaced from the probe end of the holder in case there is no through hole in the probe end. This way the optical access to the probe tip is not blocked by the holder.

When the probe support structure is attached to a measuring device, particularly to a field generating source of the measuring device, the first and the second coupling leads of the coupling structure are connected to source electrodes of the measuring device. The electrical connection between the source electrode and the coupling leads can for example be realized by soldering, wire-bonding, application of a conducting epoxy or a conducting paint, or any other commonly used method for forming an electrical connection between two conductors.

According to the invention the probe support structure can be produced in very few manufacturing steps, which reduces errors and ensures reproducibility within 100nm. No contacting of a close antenna is necessary; the only larger contacts are at the connecting end for connecting the coupling leads to source electrodes of the measuring device. In contrast to the prior art support structures, the contacts at the probe end are automatically realized as a result of the continuity of the first surface and the second surface. The method of producing a probe support structure according to the invention is suitable for large-scale production.

Preferred embodiments of the invention will be described in the accompanying drawings, which may explain the principles of the invention but shall not limit the scope of the invention. The drawings illustrate:
- Fig. 1: a three-dimensional view of a holder of a probe support structure according to the invention;
- Fig. 2: a three-dimensional view of a probe end of a holder of the probe support structure of figure 1;
- Fig. 3a: a schematical cross section through a first variant of a probe support structure of figure 1;
- Fig. 3b: a schematical cross section through a second variant of a probe support structure of figure 1;
- Fig. 4: an illustrative cross section through a probe end of the probe support structure of figure 1;
- Fig. 5: a schematical longitudinal cut of a further embodiment of a probe support structure according to the invention;
- Fig. 6: a schematical cross section through a still further embodiment of a probe support structure according to the invention; and
- Fig. 7: a schematical cross section through still another embodiment of a probe support structure according to the invention comprising a V-shaped groove.

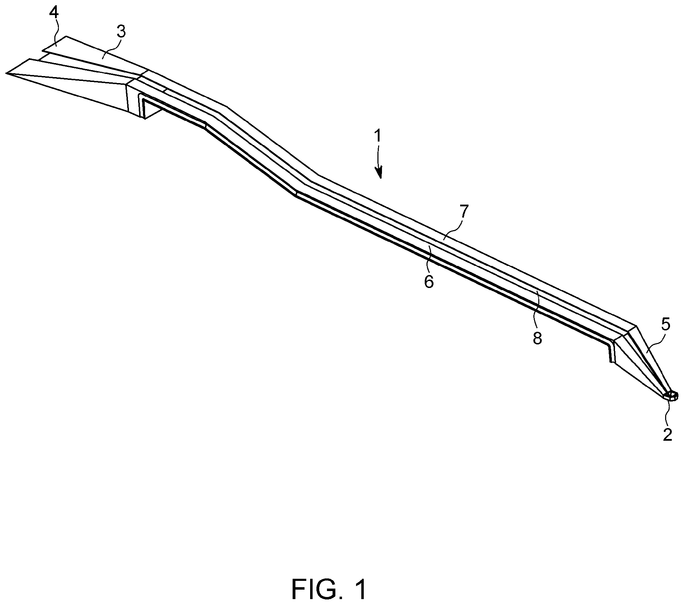

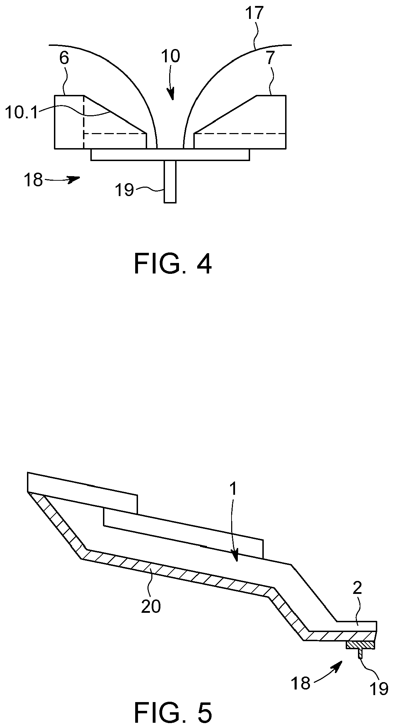

An example embodiment of a probe support structure for a nanometre-scale measuring device according to the present invention is described with reference the figures 1 to 4. A holder 1 of the probe support structure as illustrated in Figure 1. Further embodiments of a holder of a probe support structure are illustrated in Figures 5 to 7.

The holder 1 is realized as an elongated flat and rigid substrate produced by subtractive manufacturing of fused silica or by 3-dimensional printing or by photon-induced polymerization. The holder 1 comprises several sections slightly angled towards each other, which results in a downward reaching shape of the holder. The holder 1 comprises one section for a probe end 2 provided for carrying a probe unit (see figure 4) and one section for a connecting end 3 for connection to the measuring device and the field generating source, respectively. In the example of a holder of a probe support structure as shown in Figure 1, in between the probe end section and the connecting end section one or more section may extend angled towards each other downwards towards the probe section. As such, the holder 1 comprises a 3-dimentional structure, wherein the holder sections can be described as step-like sections with the probe end being lower than the connecting end, as for example illustrated in Figure 1.

The connecting end 3 comprises a wedge-shape terminating in a widened flat edge 4 for easy attachment to the measuring device. Its tapering is such that it constitutes an impedance matched transition from leads on the holder to a waveguide on the measuring device. The holder section 5 comprises the probe end 2 and is shaped in form of a wedge narrowing in width towards the probe end 2. The wedge shape allows the probe end to be the lowest point. Also, it provides mechanical stability.

Further, the surfaces on the longitudinal sides of the holder may comprise a 3-dimensional shape, for example a rippled or undulating shape or other suitable shape. For example, a curved surfaces could be used for optimized transmission or for specialized scanning geometries. The sections can be flat, sloped, curved or a combination of multiple of the beforementioned. Also, the shape of the continuous surface 9, where the first surface 6 and the second surface merge, can be optimized for a particular coupling to the color center. For example, this can be used to engineer the polarization of the electromagnetic fields produced by the loop at the point of the NV. The surface of the continuous surface defines the radiation characteristics which can be further optimized to maximize the coupling.

A longitudinal side of the holder 1 (in Figure 1 the top side of the holder) is partitioned into a first surface 6 and a second surface 7 separated by a groove 8 from each other between the probe end 2 and the connecting end 3. The first surface 6 and the second surface 7 merge with each other at the probe end 2 and define a continuous surface area 9 around a through hole 10 in the probe end 2. The first surface 6, the second surface 7 and the continuous surface area 9 realize a continuous surface at the longitudinal side of the holder 1.

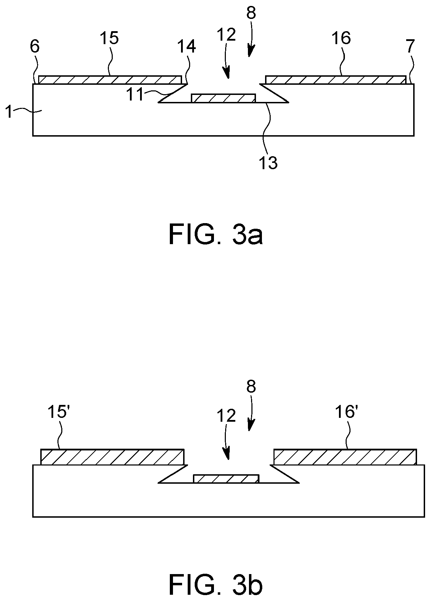

As illustrated in figures 3a and 3b, the groove 8 is formed as a recess having undercut side flanks 11. The groove can be realized as a cutout. The groove 8 basically has a trapezoidal shape with an upper parallel side 12 at the top side of the holder 1 and a lower parallel side 13 recessed into the holder 1, wherein the upper parallel side 12 is shorter than the lower parallel side 13. The edges 14 between the side flanks 11 of the groove 8 and the first surface 6, respectively the second surface 7, have an acute angle. In this case an angle of 30°, however other angles are possible

The holder 1 carries a coupling structure for near-field coupling comprising a first coupling layer 15 on the first surface 6 and a second coupling layer 16 on the second surface 7 as leads of the field coupling structure. The variant of the probe support structure shown in figure 3a comprises thinner coupling layers 15 and 16 compared to the coupling layers 15' and 16' of the variant shown in figure 3b. Preferably, the dimensions of the coupling layers are designed to be impedance matching. In general, the thickness is optimized within the limits of the design and optimized for transmission. However, the metal layer cannot be higher than the groove. The coupling layers 15 and 16 are separated from each other between the probe end 2 and the connecting end 3 of the holder 1 by the groove 8 and merge at the probe end 2 to realize a coupling loop of the field coupling structure for providing a microwave driving field at the probe end.

The coupling layers are deposited onto the first surface 6, the second surface 7 and the continuous surface area 9 by an evaporation process depositing a conductive material like for instance gold onto the surfaces. The evaporation process unidirectionally emits the conductive material onto the longitudinal side of the holder. Due to the undercut side flanks 11 of the groove 8, no conductive material is deposited onto these side flanks as illustrated in figures 3a and 3b. Thus, the first coupling layer 15 and the second coupling layer 16 are electrically isolated from each other between the probe end 2 and the connecting end 3 and merge at the probe end 2 to realize a coupling loop. The first coupling layer 15 fully covers the first surface 6 and the second coupling layer 16 fully covers the second surface 7. Thus, the leads are realized as well-defined conductors in width and length and are precisely positioned on the holder 1. As a result, an electrical current can flow along the coupling layers and around the coupling loop. Advantageously, the dimensions of the leads are chosen such that the leads are impedance matched. Also, the lead in the groove can be grounded.

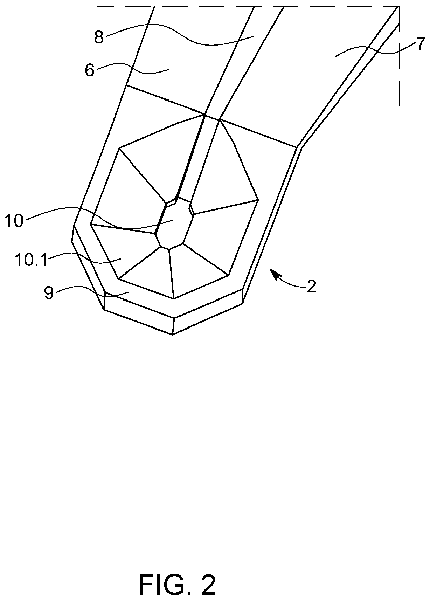

As can be seen in figures 2 and 4, the through hole 10 has a conical shape with a larger diameter at the holder side comprising the conductive area 9 (top side in figures 2 and 4) and a smaller diameter at an opposite holder side (bottom side in figures 2 and 4). In the shown example, the larger diameter is about 60 micrometers and the smaller diameter is about 10 micrometers. The thickness of the probe end is about 18 micrometers from the top side to the bottom side of the probe end. The inner wall 10.1 of the through hole 10 defines the conical shape of the through hole and is exposed to the upper side of the top side. Thus, the inner wall 10.1 may carry a conductive layer surrounding the through hole 10 as part of the coupling loop. The conductive layer surrounding the through hole 10 comprises a horizontal portion realized on the top side of the probe end 2 and an at least partially vertical portion realized on the inner wall 10.1 of the through hole 10. The vertical wall surrounding the through hole 10 is only a few micrometers thick. Alternatively, the continuous surface 9 could be designed having a conical shape and replace the inner wall 10.1.

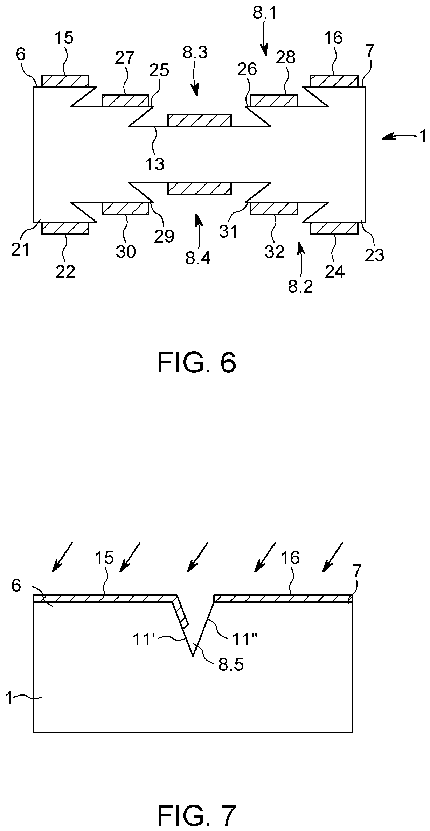

As illustrated in figure 4, the conical shape ensures optical access 17 to a sample object and allows the efficient collection of light through an objective which can be situated above the hole at the probe end. Further, a microwave radiation field created by the loop of the coupling structure leads to a concentration of the field at the center of the hole, which defines an optimal position for the probe unit. Advantageously, the probe support structure according to the invention comprises a 3-dimensional structure that allows for a horizonal current flow and/or a vertical, or near-vertical current flow at the probe end due to the conductive layer at the probe end. Also, it is possible to have two current loops, one where the current flows horizontally, and another where the current flow flows vertically. This enables more precise control over the fields experienced by a nitrogen-vacancy of the probe. For additional functionalities additional leads can be added to the embodiment of Figure 4 as described in Figure 6.

Also, shown in figure 4 is a diamond probe unit 18 comprising nanostructure with a tip 19 and a color center with a nitrogen-vacancy which interacts with the radiation field for measuring properties of a sample object. The color center is positioned directly at the center of the conical shaped hole and for example attached to the bottom side of the holder with glue. This allows optical addressing necessary for NV magnetometry. The optical access to the probe tip is not blocked by the holder.

Figure 5 illustrates a further embodiment of a probe support structure according to the invention as a sectional view in longitudinal direction of the holder 1. A first coupling layer 20 and a second coupling layer (not visible) extend along a longitudinal side of the holder 1 from the probe end 2 to the connecting end 3 and merge at the probe end 2. In this embodiment, the probe unit 18 is arranged at the same side of the holder 1 as the coupling structure. The probe unit 18 can be located close to the coupling structure and the field is not shielded by holder material.

Figure 6 illustrates a still further embodiment of a probe support structure according to the invention as a cross-sectional view of the holder 1. In this embodiment the longitudinal side of the holder 1 comprises more than one groove to separate additional surfaces of the holder side for additional leads. A first groove 8.1 is located at a first longitudinal side of the holder and a second groove 8.2 is located at a second longitudinal side of the holder, opposite to the first side. The first groove 8.1 isolates a first surface 6 with a first coupling layer 15 from a second surface 7 with a second coupling layer 16 at the first holder side. The second groove 8.2 isolates a third surface 21 comprising a third coupling layer 22 from a fourth surface 23 comprising a fourth coupling layer 24 at the second holder side. The first and the second coupling layers 15 and 16 provide a first coupling structure for example for NV magnetometry as mentioned for previous embodiments. The third and the fourth coupling layers 22 and 24 may provide a second coupling structure. However, it is emphasised that the additional leads as provided by the third and the fourth coupling layers 22 and 24 can join into a looped layout but do not necessarily have to be merged at the probe end. For example, for scanning tunnel microscopy (STM), leads ending at the probe end are sufficient.

Additionally, in the lower side 13 of the groove 8.1 on the first holder side, there is a third groove 8.3, which separates the lower side 13 into a fifth surface 25 and a sixth surface 26. The fifth surface 25 comprises a fifth coupling layer 27 and a sixth surface 26 comprises a sixth coupling layer 28. The coupling layers 27 and 28 provide a third coupling structure as an additional current source. In the same way, in the lower side of the groove 8.2 on the second holder side, there is a fourth groove 8.4, which separates the lower side into a seventh surface 29 with a seventh coupling layer 30 and an eighth surface 31 with an eighth coupling layer 32. The coupling layers 30 and 32 provide a fourth coupling structure.

Figure 7 illustrates a further embodiment of a probe support structure according to the invention as a cross-sectional view of the holder 1. In this embodiment the longitudinal side of the holder 1 comprises a V-shaped groove 8.5. The groove 8.5 is tapered starting with a large diameter at the surface of the holder and narrowing to a smaller diameter as a recess in the surface. In this embodiment the groove does not have undercuts as discussed for other embodiments earlier. In the evaporation process to provide the coupling layers, the conductive material is directed onto the first surface 6 and the second surface 7 in an angle smaller than 90°, as indicated by arrows in Figure 7, for example an angle between 45° and 60°. The evaporation process unidirectionally emits the conductive material onto the longitudinal side of the holder, while a lower part of the side flank 11' on one side of the groove 8.5 is blocked by the opposing side flank 11" and the second surface 7, respectively, and therefore is not exposed to the evaporation material. As a result, the lower part of the side flank 11' and the side flank 11" are not covered by conductive material and the V-shaped groove 8.5 isolates the first surface 6 with the first coupling layer 15 from the second surface 7 with the second coupling layer 16.

The embodiments of Figures 5 to 7 show varieties of possible adaptions of the probe support holder to a particular experimental scanning geometry. Other shapes and geometries of probe support holder are possible which can be optimized to a specific experimental scanning geometry.

According to the invention the coupling structure is integrated directly into the probe support structure comprising the diamond tip through a subtractive manufacturing process followed by evaporation of conductive material onto the top side. The probe support structure is manufactured with better than 100 nm precision and features a continuous conductive layer band along the top side of the holder and loops around the diamond tip at a distance of around (or below) 15 micrometers. This approach results in a near-field coupling device that is rigidly attached to the probe unit and easily contacted to the measuring device and field generating source, respectively. The integrated coupling device is highly reproducible, dramatically reduces experimental complexity, minimizes applied microwave power, and eliminates intensity fluctuations due to antenna motions as known from the prior art.

Due to the rigid attachment of the probe unit to the holder side of the probe support structure, the standoff distance of the NV center to the conducting layer is below 15 micrometers. It ensures a high, stable microwave driving field strength at the site of the NV with minimal drive power.

Ultra-low powers still drive the spin of the nitrogen vacancy efficiently in such a configuration and the probe support structure achieves better microwave coupling than conventional antennas due to the fixed coupling structure position relative to the diamond tip, a small separation between the color center and the coupling structure and the position of the color center close to the center of the loop resulting in a high coupling field. This also enables the use of the probe support structure at ultra-low temperatures. For example, in order to work at Millikelvin temperatures, the delivered microwave power needs to be significantly below the total cooling power of typically 1000µW at 100mK. To perform scanning NV magnetometry, not only does the electromagnetic coupling need to be effective, but also the color center needs to be read out optically and atomic force microscopy (AFM) needs to be performed. Therefore, the coupling structure is designed to not restrict optical access.

The probe support structure rests for example on a tuning fork of a measuring device or another structure allowing to control the distance of the probe to the sample structure. The experimental handling during magnetometry measurements is very easy with this probe support structure. In the optical image the coupling structure is well visible and the color center therefore easy to find. The probe support structure according to the invention eliminates the need to independently align an antenna and dramatically simplifies the experimental apparatus.

### List of Reference Numbers

- 1: holder
- 2: probe end
- 3: connecting end
- 4: flat edge
- 5: holder section
- 6: first surface
- 7: second surface
- 8: groove
- 8.1: first groove
- 8.2: second groove
- 8.3: third groove
- 8.4: fourth groove
- 8.5: v-shaped groove
- 9: continuous surface area
- 10: through hole
- 10.1: inner wall
- 11, 11', 11": side flanks
- 12: upper side
- 13: lower side
- 14: edge
- 15 15': first coupling layer
- 16 16': second coupling layer
- 17: optical access
- 18: probe unit
- 19: diamond tip
- 20: coupling layer
- 21: third surface
- 22: third coupling layer
- 23: fourth surface
- 24: fourth coupling layer
- 25: fifth surface
- 26: sixth surface
- 27: fifth coupling layer
- 28: sixth coupling layer
- 29: seventh surface
- 30: seventh coupling layer
- 31: eighth surface
- 32: eighth coupling layer

## Claims

1. Probe support structure for a small-scale measuring device, particularly a micrometer-scale or nanometer-scale measuring device, comprising
- a holder (1) comprising a probe end (2) for carrying a probe unit (18) designed for scanning a sample and a connecting end (3) for connection to the measuring device, and
- a coupling structure comprising a first coupling lead and a second coupling lead separated from each other between the probe end (2) and the connecting end (3) of the holder (1) and joining at the probe end for providing a driving field at the probe end,
**characterized in that**
- at least one longitudinal side of the holder (1) carries the coupling structure, wherein
- at least a first surface (6) and a second surface (7) on at least one longitudinal side of the holder (1) are separated from each other between the probe end (2) and the connecting end (3) and connected to each other at the probe end (2), and
- the first coupling lead (15) covers the first surface (6) and the second coupling lead (16) covers the second surface (7).

2. Probe support structure according to claim 1, wherein a longitudinal side of the holder (1) is partitioned to define said at least one first surface (6) and second surface (7) separate from each other on the longitudinal side.

3. Probe support structure according to claim 1 or 2, wherein said at least one first surface (6) and second surface (7) are separated by an elongated groove (8) extending between the probe end (2) and the connecting end (3) on a longitudinal side of the holder (1).

4. Probe support structure according to the preceding claim, wherein the longitudinal side of the holder (1) comprises more than one groove (8) to separate at least one additional surface for at least one additional lead.

5. Probe support structure according to one of the preceding claims 3 or 4, wherein the groove (8) is formed as a recess having at least one undercut side flanks (11).

6. Probe support structure according to one of the preceding claims, wherein the coupling leads are realized as conducting layers (15, 16) of conductive material applied onto said first surface (6) and second surface (7).

7. Probe support structure according to one of the preceding claims, wherein the conducting layers (15, 16) are realized as deposited layers.

8. Probe support structure according to the preceding claim, wherein the conducting layers (15, 16) consist of gold, copper, platinum, silver, aluminum, palladium, and/or titanium.

9. Probe support structure according to one of the preceding claims, wherein said first surface (6) and second surface (7) merge at the probe end (2) to realize a continuous surface area (9) and the first coupling lead and the second coupling lead merge at the probe end (2) by covering the continuous surface area (9).

10. Probe support structure according to one of the preceding claims, wherein the holder (1) comprises a through hole (10) at the probe end (2) for optical access (17) through the through hole (10).

11. Probe support structure according to the preceding claim, wherein the through hole (10) has a conical shape with a larger diameter at the longitudinal side comprising said first surface (6) and second surface (7) and a smaller diameter at the opposite side of the holder (1).

12. Probe support structure according to claim 10 or 11,
wherein the through hole (10) has a diameter larger than 0.5 micrometer, preferably a diameter in the range of 1-15 micrometer, and more preferred a diameter of about 10 micrometers.

13. Probe support structure according to one of the preceding claims, wherein the holder (1) is realized as a single rigid holder.

14. Probe support structure according to the preceding claim, wherein the single rigid holder comprises several sections, preferably slightly angled towards each other defining a downward reaching shape of the holder.

15. Nanometer-scale measuring device for scanning probe measurements comprising a tuning fork, a probe unit (18) designed for scanning a sample and a probe support structure according to one of the preceding claims, wherein the probe support structure is attached to the tuning fork and carries the probe unit (18).

16. Nanometer-scale measuring device according to claim 15,
wherein the probe unit (18) is designed as an optical-active sensor.

17. Method of producing a probe support structure according to one of the preceding claims 1 to 14, wherein
- the holder (1) is formed by subtractive manufacturing of a base material or by 3-dimensional printing or by photon-induced polymerization, which includes a separation of a longitudinal side of the holder (1) into said first surface (6) and second surface (7) between the probe end (2) and the connecting end (3), and
- conductive layers (15, 16) are deposited onto said first surface (6) and second surface (7) as said first coupling lead and second coupling lead of the coupling structure.
